# EUROPEAN PATENT SPECIFICATION

(11) **EP 3 002 453 B1**
(45) Date of publication and mention of the grant of the patent: **22.02.2017**
(21) Application number: 14187103.8
(22) Date of filing: 30.09.2014
(51) Int. Cl.: F03D 7/04, H02J 3/38

(54) **Automatically setting parameter values of a wind farm controller**
Automatische Einstellung von Parameterwerten eines Windparkreglers
Réglage automatique de valeurs de paramètre de commande d'un parc éolien

(43) Date of publication of application: 06.04.2016
(73) Proprietor: Siemens Aktiengesellschaft, 80333 München (DE)
(72) Inventor: Kumar, Sathees, 7400 Herning (DK)

(56) References cited:
- WO-A1-2014/005550
- US-A1- 2012 310 426
- MARTI NEZ J ET AL: "Design and Analysis of a Slope Voltage Control for a DFIG Wind Power Plant", IEEE TRANSACTIONS ON ENERGY CONVERSION, IEEE SERVICE CENTER, PISCATAWAY, NJ, US, vol. 27, no. 1, 1 March 2012 (2012-03-01), pages 11-20, XP011455165, ISSN: 0885-8969, DOI: 10.1109/TEC.2011.2170197

## Description

### Field of invention

The present invention relates to the technical field of operating a large wind park which comprises a plurality of wind turbines. In particular, the present invention relates to a method, to a device and to a computer program for setting values of control parameters of a wind farm controller controlling a plurality of wind turbine controllers each controlling the operation of one wind turbine of a plurality of wind turbines of a wind farm. Further, the present invention relates to a system comprising such a device.

### Art Background

When a wind turbine and in particular a plurality of wind turbines being pooled in a wind farm deliver electrical power to a utility grid, several grid code requirements in relation to transient and/or dynamic responses of physical quantities such as voltage, current, reactive power, active power have to be fulfilled. Such grid code requirements are typically specified by the operator of the utility grid.

Grid code requirements are set out in so called Grid Code Connection Conditions whereby site-specific variations may be included in a corresponding bilateral agreement between the operator of the wind farm and the operator of the utility grid.

For instance the Grid Code CC.6.3.8(c) of National Grid UK (i.e. the high-voltage electric power transmission network in Great Britain) requires several provisions of a continuously acting automatic voltage control, which must be stable at all possible operational states. The relevant point for the voltage control is the Grid Entry Point or the Point of Common Coupling (PCC) of a wind farm.

Specifically, the Grid Code CC requires in Appendix 7 the following characteristics at the PCC.
(A) The voltage set point should be adjustable over a range of ±5% with a resolution of better than 0.25% (see CC.A.7.2.2.2).
(B) The voltage control should have a reactive slope characteristic, which must be adjustable over a range of 2 to 7% with a resolution of 0.5%. The initial setting should be 4% (see CC.A.7.2.2.3).
(C) The speed of the response to a step change should be sufficient to deliver 90% of the reactive capability within one second with any oscillations damped out to less than 5% peak to peak within a further one second (see CC.A.7.2.3.1).
(D) The voltage control should deliver any reactive power output correction due from a voltage operating point deviating from the slope characteristic within 5 seconds (see CC.A.7.2.2.5).
(E) A Power Park Module must continue to provide voltage control through reactive power modulation within the designed capability limits over the full PCC voltage range ±10%, whereas the full reactive power modulation capability is only required to be delivered for voltages within ±5% of the nominal voltage (see CC.A.7.2.2.6).

In order to comply with such grid code requirements the operation of a wind farm has to be controlled in a sophisticated manner. Specifically, different types of controllers are used which are assigned to different points and in particular which are assigned to different voltage levels within the wind farm.

A first type of controller is assigned to each individual wind turbine and controls only the operation of this individual wind turbine. In this document this first type of controller is denominated (individual) wind turbine controller. The second type of controller is the so called (central) wind farm controller which acts as a superordinate controller for all individual wind turbine controllers. The wind farm controller may be a so called High Performance Park Pilot (HPPP) controller.

By supervising the operation of the individual wind turbine controllers the central wind farm controller may control the operation of the individual wind turbines in a coordinated manner. Specifically, via a wired or wireless data connection to the individual wind turbine controllers, the central wind farm controller can collect operational information regarding the individual wind turbines and transmit appropriate control signals to the respective individual wind turbine controllers.

The central wind farm controller may manage a correction of the overall wind farm power output, such that an appropriate overall power production of the wind farm can be achieved. This is accomplished by a superordinate power setpoint for the overall power production. In order to realize an appropriate overall wind farm power output, based on the superordinate power setpoint an appropriate individual power setpoint has to be determined for each individual wind turbine. This determination is typically carried out by means of a separate algorithm, which is executed in each individual wind turbine controller.

A wind farm controller has several parameters that can be set. These parameters can be adjusted in order to enable an optimal power output of the whole wind farm. Further, when it comes to fulfilling grid code requirements for voltage, apparent power, reactive power and/or power factor an appropriate parameter setting can guarantee a good operational performance in order to fulfill, at any time of operation, the grid code requirements.

Today it is required that one should be able to change the values of certain parameters of the wind farm controller and the output of the wind farm at the PCC should still comply with the given grid code requirements. However, changing parameters will change the dynamical behavior of the wind farm. Hence, it might be possible that the response measured at the PCC does not comply with the given grid code requirements anymore.

Document *"*Design and Analysis of a Slope Voltage Control for a DFIG Wind Power Plant", Martinez et al, IEEE Transactions on Energy Conversion, Vol. 27, no. 1, March 2012, pages 11-20, provides an example of a wind farm controller with setting of some parameters via gain-scheduling.

There may be a need for providing a procedure for setting parameters of a wind farm controller resulting in a robust wind farm control which results in a compliance with given grid code requirements even when at least one parameter is changed.

### Summary of the Invention

This need may be met by the subject matter according to the independent claims. Advantageous embodiments of the present invention are described by the dependent claims.

According to a first aspect of the invention there is provided a method for setting values of control parameters of a wind farm controller controlling a plurality of wind turbine controllers each controlling the operation of one wind turbine of a plurality of wind turbines of a wind farm. The provided method comprises the steps of (A) determining a transfer function between a reference signal for the wind farm controller and a measurement signal being indicative for a voltage level at a point of common coupling of the wind farm; (B) recognizing a change of the value of a first parameter of the control parameters; (C) varying the value of a second parameter of the control parameters; (D) calculating, based on (i) the determined transfer function, (ii) the changed value of the first parameter, and (iii) the varied value of the second parameter, for a reference signal change being virtually applied to the wind farm controller a virtual response function of a virtual voltage level at the point of common coupling; and (E) determining, based on the calculated virtual response function, whether an operational control of the wind farm by the wind farm controller with (i) the changed value of the first parameter and with (ii) the varied value of the second parameter would lead to a stability of the voltage level at the point of common coupling, which stability fulfills given grid code requirements. If the given grid code requirements are fulfilled, then the provided method further comprises (F1) storing (i) the changed value of the first parameter and (ii) the varied value of the second parameter in the wind farm controller. If the given grid code requirements are not fulfilled, then the provided method further comprises (F2) a repeating of step (C).

The described method is based on the idea that by determining the relationship between (i) a reference signal for the wind farm controller and (ii) a resulting measurement signal being characteristic for the voltage level at the point of common coupling (PCC) important information about the behavior of the operational control of the whole wind farm can be obtained. With this information optimized values for control parameters being used by the wind farm controller can be determined by means of an iterative procedure wherein the value of the second parameter is varied as long as an appropriate parameter setting for the wind farm controller is realized.

Put in other words, the described method represents an algorithm with which the respective parameter may either be increased/decreased or may be varied according to a monte carlo simulation in order to find an appropriate set of parameter values.

The term "reference signal change" may particularly denote any type of change of the reference signal between an initial first signal level to a final second signal level being different with respect to the initial first signal level.

In accordance with known terminology used for describing the operation of wind farms the PCC may be present on a collector bus respectively a bus bar at which all the electric power being generated by the plurality of wind turbines of the wind park is brought together or is aggregated.

The described wind farm controller may comprise different control logics such as a proportional control logic, an integrative control logic, a derivative control logic, or any combination between these control logics.

Descriptive speaking, the described method provides a self-tuning and/or automatic procedure for optimizing the parameter values used by a wind farm controller in order to fulfil in a reliable manner a response at PCC which is specified in grid code requirements. Therefore, a wind farm controller being configured for carrying out the described method on its own can be denominated a self-tuning wind farm controller.

The mentioned self-tuning capability can be used for any physical quantity at the PCC, which physical quantity may be relevant for fulfilling grid code requirements. Specifically, these physical quantities may be the voltage, the current, the apparent power, the reactive power, the power factor, and/or the active power being present at or being transmitted through the PCC.

According to an embodiment of the invention determining the transfer function is carried out in an operational state of the wind farm, in which operational state the wind farm produces electric power and forwards the produced electric power to a utility grid. This may mean that the described method can be carried out during a normal operation of the wind farm and there is no need to interrupt the power production. As a consequence, the described method can be carried out frequently without disturbing the efficiency of the power production of the wind farm being controlled with the described wind farm controller.

According to a further embodiment of the invention the reference signal is a time varying reference signal, and the measurement signal is, caused by the variation in time of the reference signal, a time varying measurement signal. Thereby, the transfer function may be a time domain transfer function, i.e. a transfer function being effective in the time domain and not in the frequency domain. This may allow for an easy further processing of the transfer function within the framework of the described method.

Using a time varying reference signal may further provide the advantage that the dependency of the measurement signal respectively the voltage level at the PCC from the reference signal can be determined in a precise manner. Further, the time domain transfer function is capable of describing this dependency with the same accuracy.

In this document the term "time varying" may mean in particular that the respective signal has an amplitude respectively a level, which is not constant and which changes with time. Thereby, the time changes may exhibit any periodic or non-periodic behavior.

According to a further embodiment of the invention a variation amplitude of the time varying reference signal is smaller than 10%, preferably smaller than 5%, more preferably smaller than 3%, and in particular smaller than 1.5% with respect to a DC level of the time varying reference signal. This may provide the advantage that when performing the described method a usual operation of the wind farm is perturbed only to a negligible extent. As a consequence the efficiency of the whole wind farm will not be deteriorated even when performing the described method very often. Of course, when performing the described method leads to an improved parameter setting for the wind farm controller it may even be possible that not only the stability with respect to grid code requirements will be improved but also the efficiency of the power production of the whole wind farm may be increased.

According to a further embodiment of the invention the time varying reference signal comprises a signal component having a sinusoidal shape. This may provide the advantage that it will be very easy to carry out the described method because the required sinusoidal reference signal can be generated in an easy manner e.g. by means of a very simple waveform generator.

According to a further embodiment of the invention the time varying reference signal comprises a plurality of sinusoidal signal components each having a different frequency.

In accordance with basic principles of Fourier Transformations a superposition of the plurality of sinusoidal signal components can result in any time dependent reference signal having either a periodicity of being not periodic. In the first case the time dependent reference signal may even have e.g. a periodic pulsed waveform. In the latter case the time dependent reference signal may even have e.g. the waveform of a single pulse.

Descriptive speaking, according to this embodiment for determining the transfer function a plurality of frequency components will be taken into account. As a consequence, the dependency of the voltage level at the PCC from the reference signal can be determined (and described) in an even more precise manner.

According to a further embodiment of the invention the time varying reference signal has a sinusoidal shape which oscillation frequency changes with time.

A corresponding frequency change with time might be realized in a discrete or in a non-discrete manner. In the first case the oscillation frequency is changed at certain, preferably periodic, time points respectively with a certain frequency change or frequency step delta f. In the latter case there is made a so called frequency sweep wherein the frequency is varied in a continuous or stepless manner. Both way of changing the oscillation frequency can be realized in an easy manner by means of e.g. an usual waveform generator.

Generally speaking, using a time varying reference signal having a sinusoidal shape with a changing oscillation frequency may allow to easily determine the transfer function in an automatic manner.

According to a further embodiment of the invention the transfer function describes amplitude and/or phase relationships between the time varying reference signal and the time varying measurement signal.

The transfer function may be represented for instance in a so called Bode plot. A Bode plot is a commonly known graphical representation of a linear, time-invariant vibratory mechanical or non-mechanical system versus frequency, plotted with a log-frequency axis. A Bode plot illustrates in a comprehensive manner the system's frequency response. The Bode plot may be a combination of a Bode magnitude plot, expressing the magnitude of the frequency response gain, and a Bode phase plot, expressing the phase shift of the frequency response.

Using a Bode plot or any other representation describing or illustrating the mentioned amplitude and/or phase relationships may allow for a very easy further processing of the transfer function within the framework of the described method. In particular, with a Bode plot the above identified step (A), i.e. determining the transfer function ..., may be realized in an automatic manner with appropriate software calculations in a so called Virtual Wind Farm Execution Software in the wind park controller that can find the bode plot by injecting sinusoidal signal with different frequencies.

According to a further embodiment of the invention in step (D) the reference signal change is a step-like change of the reference signal.

Virtually applying a step-like change of the reference signal to the wind farm controller means that the actual level of the reference signal is changed in an abrupt manner. As a consequence, the virtual response function can be calculated in a reliable and precise manner.

According to a further embodiment of the invention the control parameters include a third parameter. Further, if, after repeating the sequence of steps (C), (D), and (E) for a predefined number of times, the given grid code requirements are not fulfilled, the method further comprises the steps of (G) varying the value of the third parameter; (H) calculating, based on (i) the determined transfer function, (ii) the changed value of the first parameter, (iii) the varied value of the second parameter, and (iv) the changed value of the third parameter, for a further reference signal change being virtually applied to the wind farm controller a further virtual response function of a further virtual voltage level at the point of common coupling; (I) determining, based on the calculated further virtual response function, whether an operational control of the wind farm by the wind farm controller with (i) the changed value of the first parameter, (ii) the varied value of the second parameter, and (iii) the varied value of the third parameter would lead to a stability of the voltage level at the point of common coupling, which stability fulfills the given grid code requirements. If the given grid code requirements are fulfilled, the method further comprises (J1) storing the changed value of (i) the first parameter, (ii) the varied value of the second parameter, and (iii) the varied value of the third parameter in the wind farm controller. If the given grid code requirements are not fulfilled, the method further comprises (J2)repeating step (G).

The described extension of the above described method for setting values of control parameters may allow to optimize, again in an automatic manner, not only two but three control parameters. This makes the control parameter setting even more reliable and, as a consequence, the operation of the wind farm can be further improved in particular with respect to given grid code requirements which have to be met.

It is mentioned that depending on the specific application the further reference signal change may be different or may be the same as the reference signal change. Accordingly, the further virtual response function may be different or may be the same as the virtual response function.

According to a further embodiment of the invention the wind farm controller comprises a proportional-integral controller unit having a proportional control logic and an integral control logic. Further, the control parameters include (i) one parameter for adjusting a gain for an error signal being used by the proportional-integral controller, (ii) one parameter being assigned to the proportional control logic, and (iii) one parameter being assigned to the integral control logic.

This may provide the advantage that the above described method can be applied to a type of controller, which is very common. Therefore, the described method can be used for almost any wind farm which is already in operation or which will be built in the future.

In accordance with a first preferred embodiment the first parameter is the parameter for adjusting the gain for the error signal, the second parameter is the parameter being assigned to the proportional control logic, and the third parameter is the parameter being assigned to the integral control logic.

In accordance with a second preferred embodiment the first parameter is the parameter for adjusting the gain for the error signal, the third parameter is the parameter being assigned to the proportional control logic, and the second parameter is the parameter being assigned to the integral control logic.

At this point it is mentioned that the wind farm controller may in addition or as an alternative other appropriate types of controllers other than a proportional-integral controller.

According to a further aspect of the invention there is provided a device for setting values of control parameters of a wind farm controller controlling a plurality of wind turbine controllers each controlling the operation of one wind turbine of a plurality of wind turbines of a wind farm. The provided device comprises a processor, which is configured for controlling and/or carrying out the method as set forth above.

The described device may be external to or may be internal (i.e. integrated) in the wind farm controller. The described device may be realized by means of an appropriately programmed computer respectively software. However, the device may also be realized by means of one or more specific electronic circuits respectively hardware. Furthermore, the device may also be realized in a hybrid form, i.e. in a combination of software modules and hardware modules.

According to an aspect of the invention there is provided a system for coordinating the operation of a plurality of wind turbines of a wind farm. The provided system comprises a device as set forth above; and a measurement device which is connected with the device and which is connectable with the point of common coupling. The measurement device is configured (i) for measuring the voltage level at the point of common coupling and (ii) for providing the measurement signal to the wind farm controller.

The described system is based on the idea that with the measurement device representing an existing measurement module at the PCC the above described method can be realized. Apart from providing the measurement device the described method can be carried out without any additional hardware because, as has already been mentioned above, apart from the voltage level measurement process all other functionalities or procedures being necessary for carrying out the described method can be realized with software, in particular with software being executed by a processor of the wind farm controller.

According to a further aspect of the invention there is provided a computer program for setting values of control parameters of a wind farm controller controlling a plurality of wind turbine controllers each controlling the operation of one wind turbine of a plurality of wind turbines of a wind farm. The computer program, when being executed by a data processor, is adapted for controlling and/or for carrying out the method as set forth above.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a simplified block diagram of a wind warm with a wind farm controller being configured for performing an automatic self tuning procedure for setting its control parameter values.
Figure 2 shows, on a time scale for different frequencies of a sinusoidal reference signal for a wind farm controller, the difference between the sinusoidal reference signal and the resulting sinusoidal voltage signal at the point of common coupling of the wind farm.
Figure 3 shows in a Bode plot the transfer function between the sinusoidal reference signal and the resulting sinusoidal voltage signal at the point of common coupling.
Figure 4 shows a flow chart illustrating an algorithm for automatically setting the values of a second control parameter and a third control parameter for a wind farm controller in response to a certain change of the value of a first control parameter for the wind farm controller.
Figure 5 shows a diagram illustrating characteristic features of a response function corresponding to a virtual measurement signal at the point of common coupling, which characteristic features must be fulfilled in order to consider that the actual parameter values would result in a compliance with given grid code requirements.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

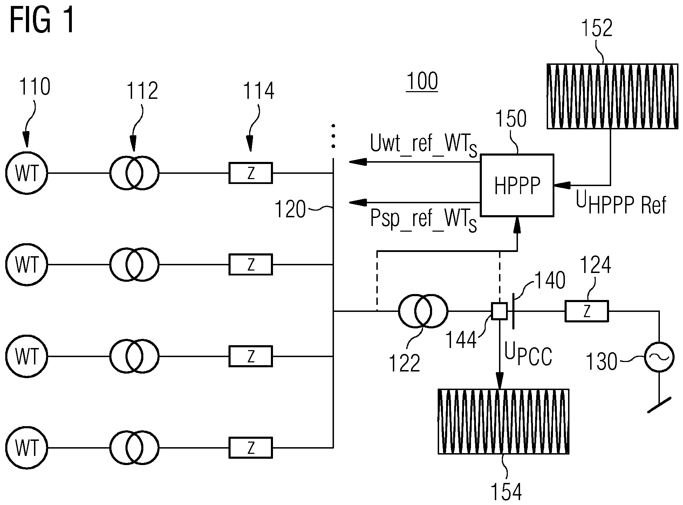

Figure 1 shows a simplified block diagram of a wind warm 100. The wind farm 100 comprises a plurality of aggregated wind turbines 110. In Figure 1 there are, for the ease of clarity, depicted only four wind turbines 110. Each wind turbine 110 may comprise in a usual manner several components like e.g. a tower, a nacelle, a rotor, an optional gear box , an electric generator, a power inverter, and an individual wind turbine controller. Again for the sake of clarity of the illustration these usual components are not depicted.

The electric powers being produced by the wind turbines 110 are fed through respective wind turbine transformers 112 and via respective power lines, which are illustrated with their line impedances 114, to a medium voltage bus bar 120. At the medium voltage bus bar 120 all produced powers are summed up and are fed to an input side of a park transformer 122. An output side of the park transformer 122 is connected to a further bus bar 140, which represents the so called point of common coupling (PCC).

The PCC 140 is linked via a power line to an (external) utility grid 130. This power line is illustrated with its line impedance 124.

In accordance with the standard wind farm configurations there is provided a wind farm controller 150, which in this document is also denominated High Performance Park Pilot (HPPP) controller. According to the exemplary embodiment described here an input of the HPPP controller 150 is connected with the medium voltage bus bar 120. Based inter alia from a signal being received via this input the HPPP controller 150 determines, for each wind turbine 110, appropriate power set points Psp ref WTs and voltage set points Uwt ref WTs. These set points are distributed respectively to the respective (individual) wind turbine controller of the wind turbines 110.

In accordance with the exemplary embodiment described here the wind farm 100 further comprises a measurement device 144 which is electrically connected to the PCC 140. The measurement device 144 provides to the HPPP controller 150 a measurement signal being indicative for the actual voltage level at the PCC 140.

As has already been mentioned above in this document, the HPPP controller 150 in accordance with an embodiment of the invention is able for a self-configuration respectively a self-tuning with respect to the values of its control parameters being used for the coordinated operational control of the plurality of wind turbines 110. As has further been mentioned above, this self-tuning takes into account a transfer function, which can be determined by comparing a sinusoidal reference signal 152 for the HPPP controller 150 with a sinusoidal measurement signal 154 being provided by the measurement device 144 and being indicative for the actual voltage level at the PCC 144. According to the exemplary embodiment described here this comparison is made for a plurality of different sinusoidal reference signals each having a different frequency.

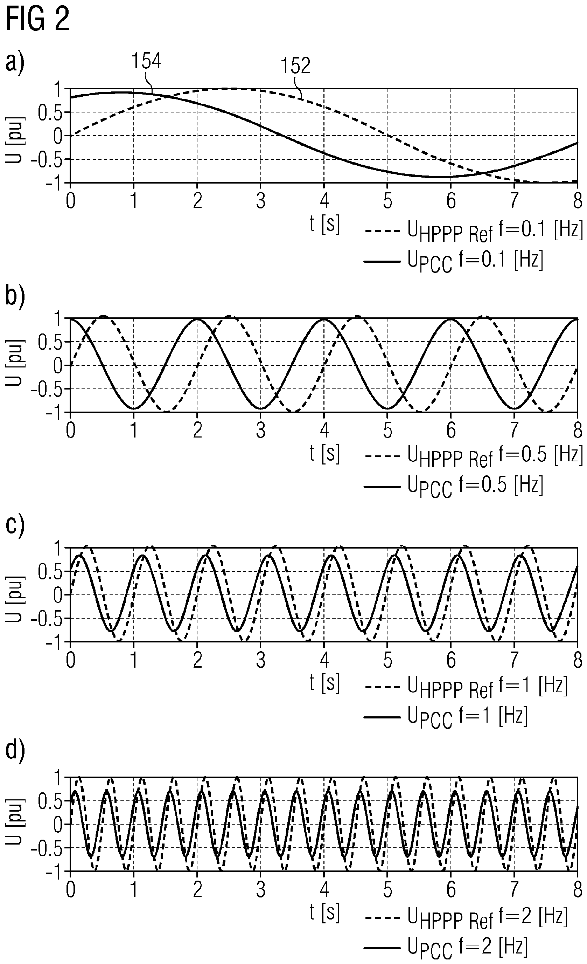

Figure 2 shows, on a time scale for different frequencies of a sinusoidal reference signal for the HPPP controller 150, the difference between the respective sinusoidal reference signal 152 and the resulting sinusoidal measurement signal 154 being indicative for the actual voltage signal at the PCC 140.

It is mentioned that in Figure 2 there is only shown the AC component of the respective signals. The DC-level of the respective signals is subtracted. As a consequence, the baseline for all signals is at a voltage level of zero. As can be seen from the scaling of the ordinates of the plots (a), (b), (c), and (d) of Figure 2, the amplitude of the AC component is only 1% at most. This means that the perturbation of the reference signal caused by the superimposed AC component is comparatively small such that the described determination of the transfer function can be carried out during the normal operation of the wind farm 100 without significantly disturbing the overall operation of the wind farm 100.

Plot (a) of Figure 2 depicts both the sinusoidal reference signal 152 and the resulting sinusoidal measurement signal 154 for a frequency of 0.1 Hz. Compared to the sinusoidal reference signal 152 the sinusoidal measurement signal 154 has the same (AC) amplitude and a certain phase shift. Plot (b) depicts the situation for a frequency of 0.5 Hz. The amplitude of both signals is still the same but the phase shift has changed. Plot (c) depicts the situation for a frequency of 1.0 Hz. Now, the amplitude of the measurement signal becomes smaller and the phase shift has again changed. Plot (d) depicts the situation for a frequency of 2.0 Hz. The amplitude of the measurement signal has become again smaller and the phase shift has been further changed a little bit.

Descriptive speaking, determining the transfer function of the wind farm means that one gets detailed information how the entire wind farm 100 behaves in the frequency domain. In order to identify the frequency domain behavior the sinusoidal reference signals U_{HPPP Ref} are supplied to the HPPP controller 150 and the corresponding sinusoidal voltage signals U_{PCC} as measured at the PCC 140 are evaluated. This is done for different sinusoidal frequencies. The evaluation shows how much the signal is amplified/attenuated and how much the signal is phase shifted.

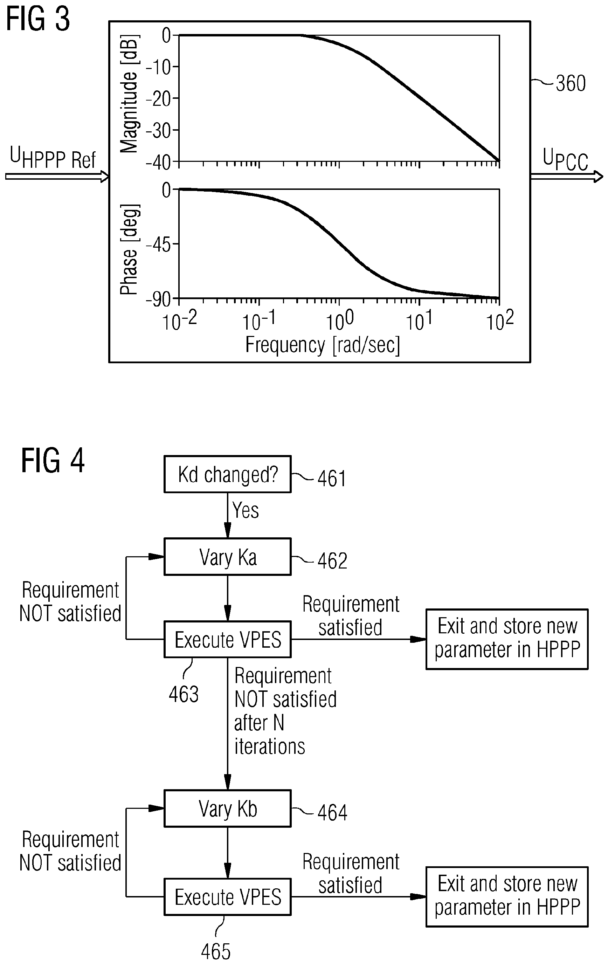

It is mentioned that in Figure 2 that the gatherable phase shifts are not the absolute phase shifts because of an existing phase shift offset. The absolute phase shifts can be seen in Figure 3.

Figure 3 shows in a Bode plot the transfer function 360 between the sinusoidal reference signal and the resulting sinusoidal voltage signal at the PCC 140. In the upper diagram the amplitude part of the transfer function is depicted. In the lower part the phase shift part of the transfer function is depicted.

Figure 4 shows a flow chart illustrating an algorithm for automatically setting the values of a second control parameter and a third control parameter for the HPPP controller 150 in response to a certain change of the value of a first control parameter Kd for the HPPP controller 150. The shown algorithm relies on the transfer function of the entire wind farm 100 in the frequency domain which has been determined before as described above.

According to the exemplary embodiment described here the second parameter Ka is indicative for the strength of a proportional control of a proportional-integral controller within the HPPP controller 150. Further, the third parameter Kc is indicative for the strength of an integral control of the proportional-integral controller.

As can be seen from Figure 4, the algorithm starts with a first step 461, at which a change of the value of the first parameter Kd is recognized. This change may be made in particular by an operator of the wind farm 100 respectively the wind farm controller 150, who is trying to improve the performance of the entire wind farm 100. However, it may be of course also possible that the change of Kd has been made automatically by an appropriate software procedure.

If such a Kd change has been recognized, in a second step 462 there is made a variation (or a change) of the value of the second parameter Ka. Thereby, the value of the second parameter Ka may be either decreased or increased according to a try and error procedure and/or a Monte Carlo procedure.

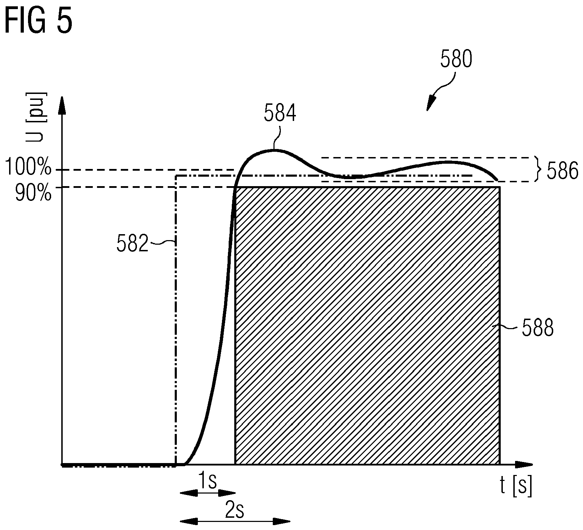

Thereafter, a software procedure is carried out in a third step 463. In this document this software procedure is called "Virtual Plant Execution Software" (VPES). The VPES is capable of virtually providing to the HPPP controller 150 a step input (for the reference signal) and of calculating the (virtual) step response based on the before determined transfer function. The VPES is programmed in an appropriate manner. This means that the VPES knows for the given grid code requirements the allowed characteristics for the virtual step response, which will be elucidated in detail below with reference to Figure 5. Descriptive speaking, the VPES knows for the given grid code requirements the allowed characteristics for the virtual step response.

The VPES determines whether with the actual settings of the parameter values for Kd, Ka, and Kb the grid code requirements would be fulfilled. If this is the case, the algorithm is stopped and the actual parameter values for Kd, Ka, and Kb are stored in a memory of the HPPP controller 150 which then goes in usual operation. If this is not the case, the algorithm returns back to the second step 462.

If, after having repeatedly performed the VPES in step 463 for a predefined number N of times (e.g. N = 10, 50, or 100), the (amended) actual setting of the parameter values for Kd, Ka, and Kb does not yield a fulfillment of the grid code requirements, the algorithm continues with a fourth step 464.

In the fourth step 464 the value of the third parameter Kb is varied. In accordance with step 462, the value of the third parameter Kb may be either decreased or increased with a try and error procedure or based on a Monte Carlo procedure.

Thereafter, the software procedure VPES is again carried out in a fifth step 465 and it is again determined whether the actual control parameter values would yield an operation of the wind farm 100 which satisfies the given grid code requirements. Thereby, again the virtual response to a virtual step change at the reference signal for the HPPP controller 150 evaluated.

The VPES determines, now for the changed/varied actual values for the control parameters Kd, Ka, and Kb, whether the grid code requirements would be fulfilled. If this is the case, the algorithm is stopped and the actual parameter values for Kd, Ka, and Kb are stored in the memory of the HPPP controller 150. If this is not the case, the algorithm returns back to the fourth step 464.

It is mentioned that it is also possible that, if after returning to the fourth step 464 for a predefined number N' of times the described algorithm will not lead to the control parameter setting which would fulfill the given grid code requirements, the described algorithm can continue again with the second step 462. Therefore, many different combinations of the value of the second parameter Ka and of the value of the third parameter Kb can be checked whether they would lead to the stable operation of the wind farm 100.

It is mentioned that the above mentioned number N' may be the same as or may be different than the above mentioned number N.

Figure 5 shows a diagram 580 illustrating characteristic features of a response function corresponding to a virtual measurement signal at the PCC 140, which characteristic features must be fulfilled in order to consider that the actual parameter values would result in a compliance with given grid code requirements. The abscissa of the diagram 580 is a time axis with the unit "second", the ordinate of the diagram 580 is a voltage axis, wherein the voltage levels at the PCC are given in relative % units with respect to the desired voltage level at the PCC.

Reference number 582 refers to a dotted/dashed line indicating the virtual reference signal for the HPPP controller 150, which signal 582 comprises the step change. Reference number 584 denominates the response function representing the virtual voltage signal at the PCC 140. Reference number 586 illustrates an allowed bandwidth for oscillations of the response function 584 after a point in time which according to the embodiment described here is one second after the time at which the step change of the virtual reference signal has occurred.

According to the embodiment described here, in the time-voltage diagram 580 there is a forbidden area 588 which must not be crossed by the response function 584 if the given grid code requirements should be met.

As can be further taken from figure 5, according to the embodiment described here the response function must show the further characteristic feature, if the given grid code requirements should be considered as to be met. This characteristic feature requires that within 2 seconds after the step of the virtual reference signal has occurred, the first overshot of the response function 584 must be finished.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for setting values of control parameters (Kd, Ka) of a wind farm controller (150) controlling a plurality of wind turbine controllers each controlling the operation of one wind turbine (110) of a plurality of wind turbines (110) of a wind farm (100), the method comprising the steps of
(A) determining a transfer function (360) between a reference signal (152) for the wind farm controller (150) and a measurement signal (154) being indicative for a voltage level at a point of common coupling (140) of the wind farm (100);
(B) recognizing a change of the value of a first parameter (Kd) of the control parameters;
(C) varying the value of a second parameter (Ka) of the control parameters;
(D) calculating, based on (i) the determined transfer function (360), (ii) the changed value of the first parameter (Kd), and (iii) the varied value of the second parameter (Ka), for a reference signal change (582) being virtually applied to the wind farm controller (150) a virtual response function (584) of a virtual voltage level at the point of common coupling (140);
(E) determining, based on the calculated virtual response function (584), whether an operational control of the wind farm (100) by the wind farm controller (150) with (i) the changed value of the first parameter (Kd) and (ii) the varied value of the second parameter (Ka) would lead to a stability of the voltage level at the point of common coupling (140), which stability fulfills given grid code requirements; and
(F1) if the given grid code requirements are fulfilled, storing (i) the changed value of the first parameter (Kd) and (ii) the varied value of the second parameter (Ka) in the wind farm controller (150), and
(F2) if the given grid code requirements are not fulfilled, repeating step (C).

2. The method as set forth in the preceding claim, wherein determining the transfer function is carried out in an operational state of the wind farm (100), in which operational state the wind farm (100) produced electric power and forwards the produced electric power to a utility grid (130).

3. The method as set forth in any one of the preceding claims, wherein
the reference signal is a time varying reference signal (152), and
the measurement signal is, caused by the variation in time of the reference signal (152), a time varying measurement signal (154).

4. The method as set forth in the preceding claim, wherein a variation amplitude of the time varying reference signal (152) is smaller than 10%, preferably smaller than 5%, more preferably smaller than 3%, and in particular smaller than 1.5% with respect to a DC level of the time varying reference signal (152).

5. The method as set forth in any one of the preceding claims 3 to 4, wherein
the time varying reference signal comprises a signal component (152) having a sinusoidal shape.

6. The method as set forth in any one of the preceding claims 3 to 5, wherein
the time varying reference signal comprises a plurality of sinusoidal signal components (152) each having a different frequency.

7. The method as set forth in the preceding claim, wherein the time varying reference signal (152) has a sinusoidal shape which oscillation frequency changes with time.

8. The method as set forth in any one of the preceding claims 3 to 7, wherein
the transfer function (360) describes amplitude and/or phase relationships between the time varying reference signal (152) and the time varying measurement signal (154).

9. The method as set forth in any one of the preceding claims 3 to 7, wherein
in step (D) the reference signal change (582) is a step-like change of the reference signal.

10. The method as set forth in any one of the preceding claim, wherein
the control parameters include a third parameter (Kb), and if, after repeating the sequence of steps (C), (D), and (E) for a predefined number (N) of times, the given grid code requirements are not fulfilled, the method further comprises the steps of
(G) varying the value of the third parameter (Kb);
(H) calculating, based on (i) the determined transfer function (360), (ii) the changed value of the first parameter (Kd), (iii) the varied value of the second parameter (Ka), and (iv) the changed value of the third parameter (Kb), for a further reference signal change (582) being virtually applied to the wind farm controller (150) a further virtual response function (584) of a further virtual voltage level at the point of common coupling (140);
(I) determining, based on the calculated further virtual response function (584), whether an operational control of the wind farm (100) by the wind farm controller (150) with (i) the changed value of the first parameter (Kd), (ii) the varied value of the second parameter (Ka), and (iii) the varied value of the third parameter (Kb) would lead to a stability of the voltage level at the point of common coupling (140), which stability fulfills the given grid code requirements; and
(J1) if the given grid code requirements are fulfilled, storing the changed value of (i) the first parameter (Kd), (ii) the varied value of the second parameter (Ka), and (iii) the varied value of the third parameter (Kb) in the wind farm controller (150), and
(J2) if the given grid code requirements are not fulfilled, repeating step (G).

11. The method as set forth in the preceding claim, wherein
the wind farm controller (150) comprises a proportional-integral controller unit having a proportional control logic and an integral control logic and
the control parameters include
(i) one parameter for adjusting a gain for an error signal being used by the proportional-integral controller,
(ii) one parameter being assigned to the proportional control logic, and
(iii) one parameter being assigned to the integral control logic.

12. A device for setting values of control parameters (Kd, Ka) of a wind farm controller (150) controlling a plurality of wind turbine controllers each controlling the operation of one wind turbine (110) of a plurality of wind turbines (110) of a wind farm (100), the device comprising a processor, which is configured for controlling and/or carrying out the method as set forth in any one of the preceding claims.

13. A system for coordinating the operation of a plurality of wind turbines (110) of a wind farm (100), the system comprising
a device as set forth in the preceding claim; and
a measurement device (144) which is connected with the device and which is connectable with the point of common coupling (140),
wherein the measurement device is configured
(i) for measuring the voltage level at the point of common coupling (140) and
(ii) for providing the measurement signal (154) to the wind farm controller (150).

14. A computer program for setting values of control parameters (Kd, Ka) of a wind farm controller (150) controlling a plurality of wind turbine controllers each controlling the operation of one wind turbine (110) of a plurality of wind turbines (110) of a wind farm (100), the computer program, when being executed by a data processor, is adapted for controlling and/or for carrying out the method as set forth in any one of the claims 1 to 11.

## Patentansprüche

1. Verfahren zum Einstellen von Werten von Steuerparametern (Kd, Ka) einer Windparksteuerung (150), die mehrere Windenergieanlagensteuerungen steuert, die jeweils den Betrieb einer Windenergieanlage (110) von mehreren Windenergieanlagen (110) eines Windparks (100) steuern, wobei das Verfahren die folgenden Schritte umfasst:
(A) Bestimmen einer Übertragungsfunktion (360) zwischen einem Referenzsignal (152) für die Windparksteuerung (150) und einem Messsignal (154), dass hinsichtlich eines Spannungspegels an einem Verknüpfungspunkt (140) des Windparks (100) indikativ ist;
(B) Erkennen einer Änderung des Wertes eines ersten Parameters (Kd) der Steuerparameter;
(C) Variieren des Wertes eines zweiten Parameters (Ka) der Steuerparameter;
(D) Berechnen, basierend auf (i) der bestimmten Übertragungsfunktion (360), (ii) dem geänderten Wert des ersten Parameters (Kd), und (iii) dem variierten Wert des zweiten Parameters (Ka), für eine Referenzsignaländerung (582), die virtuell an die Windparksteuerung (150) angelegt wird, einer virtuellen Antwortfunktion (584) eines virtuellen Spannungspegels an dem Verknüpfungspunkt (140);
(E) Bestimmen, basierend auf der berechneten virtuellen Antwortfunktion (584), ob eine Betriebssteuerung des Windparks (100) durch die Windparksteuerung (150) mit (i) dem geänderten Wert des ersten Parameters (Kd) und (ii) dem variierten Wert des zweiten Parameters (Ka) zu einer Stabilität des Spannungspegels an dem Verknüpfungspunkt (140) führen würde, welche vorgegebene Netzanschlussbedingungen erfüllt; und
(F1) falls die vorgegebenen Netzanschlussbedingungen erfüllt sind, Speichern (i) des geänderten Wertes des ersten Parameters (Kd) und (ii) des variierten Wertes des zweiten Parameters (Ka) in der Windparksteuerung (150), und
(F2) falls die vorgegebenen Netzanschlussbedingungen nicht erfüllt sind, Wiederholen von Schritt (C).

2. Verfahren nach dem vorhergehenden Anspruch, wobei das Bestimmen der Übertragungsfunktion in einem Betriebszustand des Windparks (100) durchgeführt wird, in welchem der Windpark (100) elektrische Leistung erzeugt und die erzeugte elektrische Leistung an ein Versorgungsnetz (130) abgibt.

3. Verfahren nach einem der vorhergehenden Ansprüche, wobei
das Referenzsignal ein zeitvariables Referenzsignal (152) ist, und
das Messsignal aufgrund der zeitabhängigen Änderung des Referenzsignals (152) ein zeitvariables Messsignal (154) ist.

4. Verfahren nach dem vorhergehenden Anspruch, wobei eine Änderungsamplitude des zeitvariablen Referenzsignals (152) kleiner als 10 %, vorzugsweise kleiner als 5 %, stärker bevorzugt kleiner als 3 % und insbesondere kleiner als 1,5 % ist, bezogen auf einen Gleichstrompegel des zeitvariablen Referenzsignals (152).

5. Verfahren nach einem der vorhergehenden Ansprüche 3 bis 4, wobei
das zeitvariable Referenzsignal eine Signalkomponente (152) mit einer Sinusform umfasst.

6. Verfahren nach einem der vorhergehenden Ansprüche 3 bis 5, wobei
das zeitvariable Referenzsignal mehrere sinusförmige Signalkomponenten (152) umfasst, die jeweils eine andere Frequenz aufweisen.

7. Verfahren nach dem vorhergehenden Anspruch, wobei das zeitvariable Referenzsignal (152) eine Sinusform aufweist, deren Schwingfrequenz sich mit der Zeit ändert.

8. Verfahren nach einem der vorhergehenden Ansprüche 3 bis 7, wobei
die Übertragungsfunktion (360) Amplituden- und/oder Phasenbeziehungen zwischen dem zeitvariablen Referenzsignal (152) und dem zeitvariablen Messsignal (154) beschreibt.

9. Verfahren nach einem der vorhergehenden Ansprüche 3 bis 7, wobei
in Schritt (D) die Referenzsignaländerung (582) eine stufenförmige Änderung des Referenzsignals ist.

10. Verfahren nach einem der vorhergehenden Ansprüche, wobei die Steuerparameter einen dritten Parameter (Kb) beinhalten, und falls, nachdem die Folge von Schritten (C), (D) und (E) eine vordefinierte Anzahl von Malen wiederholt wurde, die vorgegebenen Netzanschlussbedingungen nicht erfüllt sind, das Verfahren ferner die folgenden Schritte umfasst:
(G) Variieren des Wertes des dritten Parameters (Kb);
(H) Berechnen, basierend auf (i) der bestimmten Übertragungsfunktion (360), (ii) dem geänderten Wert des ersten Parameters (Kd), (iii) dem variierten Wert des zweiten Parameters (Ka), und (iv) dem geänderten Wert des dritten Parameters (Kb), für eine weitere Referenzsignaländerung (582), die virtuell an die Windparksteuerung (150) angelegt wird, einer weiteren virtuellen Antwortfunktion (584) eines weiteren virtuellen Spannungspegels an dem Verknüpfungspunkt (140) ;
(I) Bestimmen, basierend auf der berechneten weiteren virtuellen Antwortfunktion (584), ob eine Betriebssteuerung des Windparks (100) durch die Windparksteuerung (150) mit (i) dem geänderten Wert des ersten Parameters (Kd), (ii) dem variierten Wert des zweiten Parameters (Ka) und (iii) dem variierten Wert des dritten Parameters (Kb) zu einer Stabilität des Spannungspegels an dem Verknüpfungspunkt (140) führen würde, welche vorgegebene Netzanschlussbedingungen erfüllt; und
(J1) falls die vorgegebenen Netzanschlussbedingungen erfüllt sind, Speichern (i) des geänderten Wertes des ersten Parameters (Kd), (ii) des variierten Wertes des zweiten Parameters (Ka) und (iii) des variierten Wertes des dritten Parameters (Kb) in der Windparksteuerung (150), und
(J2) falls die vorgegebenen Netzanschlussbedingungen nicht erfüllt sind, Wiederholen von Schritt (G).

11. Verfahren nach dem vorhergehenden Anspruch, wobei
die Windparksteuerung (150) eine Proportional-Integral-Steuereinheit umfasst, die eine Proportionalsteuerungslogik und eine Integralsteuerungslogik aufweist, und
die Steuerparameter beinhalten:
(i) einen Parameter zum Einstellen einer Verstärkung für ein Fehlersignal, die von der Proportional-Integral-Steuerung verwendet wird,
(ii) einen Parameter, welcher der Proportionalsteuerungslogik zugeordnet ist, und
(iii) einen Parameter, welcher der Integralsteuerungslogik zugeordnet ist.

12. Vorrichtung zum Einstellen von Werten von Steuerparametern (Kd, Ka) einer Windparksteuerung (150), die mehrere Windenergieanlagensteuerungen steuert, die jeweils den Betrieb einer Windenergieanlage (110) von mehreren Windenergieanlagen (110) eines Windparks (100) steuern, wobei die Vorrichtung einen Prozessor umfasst, welcher dafür ausgelegt ist, das Verfahren nach einem der vorhergehenden Ansprüche zu steuern und/oder auszuführen.

13. System zum Koordinieren des Betriebs mehrerer Windenergieanlagen (110) eines Windparks (100), wobei das System umfasst:
eine Vorrichtung nach dem vorhergehenden Anspruch; und
eine Messvorrichtung (144), welche mit der Vorrichtung verbunden ist und welche mit dem Verknüpfungspunkt (140) verbindbar ist,
wobei die Messvorrichtung dafür ausgelegt ist,
(i) den Spannungspegel an dem Verknüpfungspunkt (140) zu messen, und
(ii) das Messsignal (154) der Windparksteuerung (150) zuzuführen.

14. Computerprogramm zum Einstellen von Werten von Steuerparametern (Kd, Ka) einer Windparksteuerung (150), die mehrere Windenergieanlagensteuerungen steuert, die jeweils den Betrieb einer Windenergieanlage (110) von mehreren Windenergieanlagen (110) eines Windparks (100) steuern, wobei das Computerprogramm, wenn es von einem Datenprozessor ausgeführt wird, dazu eingerichtet ist, das Verfahren nach einem der Ansprüche 1 bis 11 zu steuern und/oder auszuführen.

## Revendications

1. Méthode pour régler des valeurs de paramètres de commande (Kd, Ka) d'un dispositif de commande de parc éolien (150) commandant une pluralité de dispositifs de commande d'éolienne commandant chacun le fonctionnement d'une éolienne (110) d'une pluralité d'éoliennes (110) d'un parc éolien (100), la méthode comprenant les étapes de
(A) détermination d'une fonction de transfert (360) entre un signal de référence (152) pour le dispositif de commande de parc éolien (150) et un signal de mesure (154) indiquant un niveau de tension en un point de couplage commun (140) du parc éolien (100) ;
(B) reconnaissance d'une modification de la valeur d'un premier paramètre (Kd) des paramètres de commande ;
(C) variation de la valeur d'un deuxième paramètre (Ka) des paramètres de commande ;
(D) calcul, sur la base (i) de la fonction de transfert (360) déterminée, (ii) de la valeur modifiée du premier paramètre (Kd), et (iii) de la valeur ayant subi une variation du deuxième paramètre (Ka), pour une modification de signal de référence (582) qui est virtuellement appliquée au dispositif de commande de parc éolien (150), d'une fonction de réponse virtuelle (584) d'un niveau de tension virtuel au point de couplage commun (140) ;
(E) détermination, sur la base de la fonction de réponse virtuelle (584) calculée, si une commande fonctionnelle du parc éolien (100) par le dispositif de commande de parc éolien (150) avec (i) la valeur modifiée du premier paramètre (Kd) et (ii) la valeur ayant subi une variation du deuxième paramètre (Ka) mènerait à une stabilité du niveau de tension au point de couplage commun (140), laquelle stabilité satisfait à des exigences de code de réseau données ; et
(F1) si les exigences de code de réseau données sont satisfaites, stockage (i) de la valeur modifiée du premier paramètre (Kd) et (ii) de la valeur ayant subi une variation du deuxième paramètre (Ka) dans le dispositif de commande de parc éolien (150), et
(F2) si les exigences de code de réseau données ne sont pas satisfaites, répétition de l'étape (C).

2. Méthode telle que présentée selon la revendication précédente, dans laquelle la détermination de la fonction de transfert est mise en oeuvre dans un état fonctionnel du parc éolien (100), dans lequel état fonctionnel le parc éolien (100) a produit de l'énergie électrique et fait parvenir l'énergie électrique produite à un réseau de distribution (130).

3. Méthode telle que présentée selon l'une quelconque des revendications précédentes, dans laquelle
le signal de référence est un signal de référence variant dans le temps (152), et
le signal de mesure est, en raison de la variation dans le temps du signal de référence (152), un signal de mesure variant dans le temps (154).

4. Méthode telle que présentée selon la revendication précédente, dans laquelle une amplitude de variation du signal de référence variant dans le temps (152) est plus petite que 10 %, de préférence plus petite que 5 %, plus préférablement plus petite que 3 %, et en particulier plus petite que 1,5 % par rapport à un niveau de courant continu du signal de référence variant dans le temps (152).

5. Méthode telle que présentée selon l'une quelconque des revendications 3 à 4 précédentes, dans laquelle le signal de référence variant dans le temps comprend une composante de signal (152) ayant une forme sinusoïdale.

6. Méthode telle que présentée selon l'une quelconque des revendications 3 à 5 précédentes, dans laquelle le signal de référence variant dans le temps comprend une pluralité de composantes de signal sinusoïdales (152) ayant chacune une fréquence différente.

7. Méthode telle que présentée selon la revendication précédente, dans laquelle le signal de référence variant dans le temps (152) a une forme sinusoïdale dont la fréquence d'oscillation se modifie avec le temps.

8. Méthode telle que présentée selon l'une quelconque des revendications 3 à 7 précédentes, dans laquelle la fonction de transfert (360) décrit des relations d'amplitude et/ou de phase entre le signal de référence variant dans le temps (152) et le signal de mesure variant dans le temps (154).

9. Méthode telle que présentée selon l'une quelconque des revendications 3 à 7 précédentes, dans laquelle à l'étape (D), la modification de signal de référence (582) est une modification en escalier du signal de référence.

10. Méthode telle que présentée selon l'une quelconque des revendications précédentes, dans laquelle
les paramètres de commande incluent un troisième paramètre (Kb), et si, après répétition de la séquence des étapes (C), (D), et (E) un nombre prédéfini (N) de fois, les exigences de code de réseau données ne sont pas satisfaites, la méthode comprend en outre les étapes de
(G) variation de la valeur du troisième paramètre (Kb) ;
(H) calcul, sur la base (i) de la fonction de transfert (360) déterminée, (ii) de la valeur modifiée du premier paramètre (Kd), (iii) de la valeur ayant subi une variation du deuxième paramètre (Ka), et (iv) de la valeur modifiée du troisième paramètre (Kb), pour une modification de signal de référence (582) supplémentaire qui est virtuellement appliquée au dispositif de commande de parc éolien (150), d'une fonction de réponse virtuelle (584) supplémentaire d'un niveau de tension virtuel supplémentaire au point de couplage commun (140) ;
(I) détermination, sur la base de la fonction de réponse virtuelle (584) supplémentaire calculée, si une commande fonctionnelle du parc éolien (100) par le dispositif de commande de parc éolien (150) avec (i) la valeur modifiée du premier paramètre (Kd), (ii) la valeur ayant subi une variation du deuxième paramètre (Ka), et (iii) la valeur ayant subi une variation du troisième paramètre (Kb) mènerait à une stabilité du niveau de tension au point de couplage commun (140), laquelle stabilité satisfait aux exigences de code de réseau données ; et
(J1) si les exigences de code de réseau données sont satisfaites, stockage de la valeur modifiée (i) du premier paramètre (Kd), (ii) de la valeur ayant subi une variation du deuxième paramètre (Ka), et (iii) de la valeur ayant subi une variation du troisième paramètre (Kb) dans le dispositif de commande de parc éolien (150), et
(J2) si les exigences de code de réseau données ne sont pas satisfaites, répétition de l'étape (G).

11. Méthode telle que présentée selon la revendication précédente, dans laquelle
le dispositif de commande de parc éolien (150) comprend une unité de dispositif de commande proportionnelle-intégrale ayant une logique de commande proportionnelle et une logique de commande intégrale et
les paramètres de commande incluent
(i) un paramètre pour ajuster un gain pour un signal d'erreur qui est utilisé par le dispositif de commande proportionnel-intégral,
(ii) un paramètre qui est attribué à la logique de commande proportionnelle, et
(iii) un paramètre qui est attribué à la logique de commande intégrale.

12. Dispositif pour régler des valeurs de paramètres de commande (Kd, Ka) d'un dispositif de commande de parc éolien (150) commandant une pluralité de dispositifs de commande d'éolienne commandant chacun le fonctionnement d'une éolienne (110) d'une pluralité d'éoliennes (110) d'un parc éolien (100), le dispositif comprenant un processeur, lequel est conçu pour commander et/ou mettre en oeuvre la méthode telle que présentée selon l'une quelconque des revendications précédentes.

13. Système pour coordonner le fonctionnement d'une pluralité d'éoliennes (110) d'un parc éolien (100), le système comprenant
un dispositif tel que présenté selon la revendication précédente ; et
un dispositif de mesure (144) qui est connecté au dispositif et qui est connectable au point de couplage commun (140),
dans lequel le dispositif de mesure est conçu
(i) pour mesurer le niveau de tension au point de couplage commun (140) et
(ii) pour fournir le signal de mesure (154) au dispositif de commande de parc éolien (150).

14. Programme informatique pour régler des valeurs de paramètres de commande (Kd, Ka) d'un dispositif de commande de parc éolien (150) commandant une pluralité de dispositifs de commande d'éolienne commandant chacun le fonctionnement d'une éolienne (110) d'une pluralité d'éoliennes (110) d'un parc éolien (100), le programme informatique, lorsqu'il est exécuté par un processeur de données, étant adapté à commander et/ou à mettre en oeuvre la méthode telle que présentée selon l'une quelconque des revendications 1 à 11.
